# FASCICULE DE BREVET EUROPEEN

(11) **EP 1 109 083 B1**
(45) Date de publication et mention de la délivrance du brevet: **22.04.2009**
(21) Numéro de dépôt: 99124389.0
(22) Date de dépôt: 07.12.1999
(51) Int. Cl.: G04C 10/00, H02K 3/00

(54) **Mouvement du type horloger équipé d'une génératrice**
Mit einem Generator ausgerüstetes Uhrwerk
Clockwork equipped with a generator

(43) Date de publication de la demande: 20.06.2001
(73) Titulaire: ASULAB S.A., CH-2501 Bienne (CH)
(72) Inventeur: Born, Jean-Jacques, 1110 Morges (CH)
(74) Mandataire: Surmely, Gérard

(56) Documents cités:
- EP-A- 0 751 445
- EP-A- 0 905 587

## Description

La présente invention se rapporte à un mouvement horloger équipé d'une génératrice en particulier pour montre-bracelet.

L'utilisation de batteries ou d'accumulateurs est pour toutes les applications, et en particulier pour une montre, un facteur limitant des caractéristiques de l'appareil. En effet, le changement ou la recharge de ces batteries ou accumulateurs affecte la disponibilité et la fiabilité de la montre.

Dans ce contexte, la montre mécanique traditionnelle possède un avantage certain dans la technique horlogère : une telle montre est disponible en permanence. La recharge en énergie - celle-ci étant purement mécanique - se fait simplement par remontage du mécanisme de la montre.

Ce type de montre utilise un dispositif de remontage manuel ou automatique couplé généralement à un dispositif de régulation nommé dans l'usage "échappement à ancre suisse". Ce dispositif de régulation permet difficilement d'obtenir une grande précision. Ce système est en outre relativement coûteux.

L'autre grande famille concerne la montre à quartz classique. Une batterie alimente simultanément un moteur électrique et un dispositif de régulation de la marche de ce moteur. La rotation du moteur est pilotée par une fréquence nominale fournie par un quartz. Ceci permet d'avoir une bonne précision pour l'indication de l'heure. Toutefois, ce dispositif est relativement bruyant car l'avance de la roue des secondes est saccadée et la batterie doit être changée périodiquement.

De nouveaux types de montres ont été réalisés de façon à coupler les deux systèmes précités et exploiter leurs avantages respectifs. Dans ces réalisations, on a associé un stockage mécanique de l'énergie à une régulation par quartz, alimentée en énergie électrique par une génératrice entraînée par une partie mécanique couplée à un ressort de stockage de l'énergie.

Comme état de la technique correspondant peut être cité notamment l'article de MM Born, Dinger et Farine, "Salto - Un mouvement mécanique à remontage automatique ayant la précision d'un mouvement à quartz" paru dans la publication de la Société Suisse de Chronométrie "SSC journées d'étude 1997", pages 55 à 63.

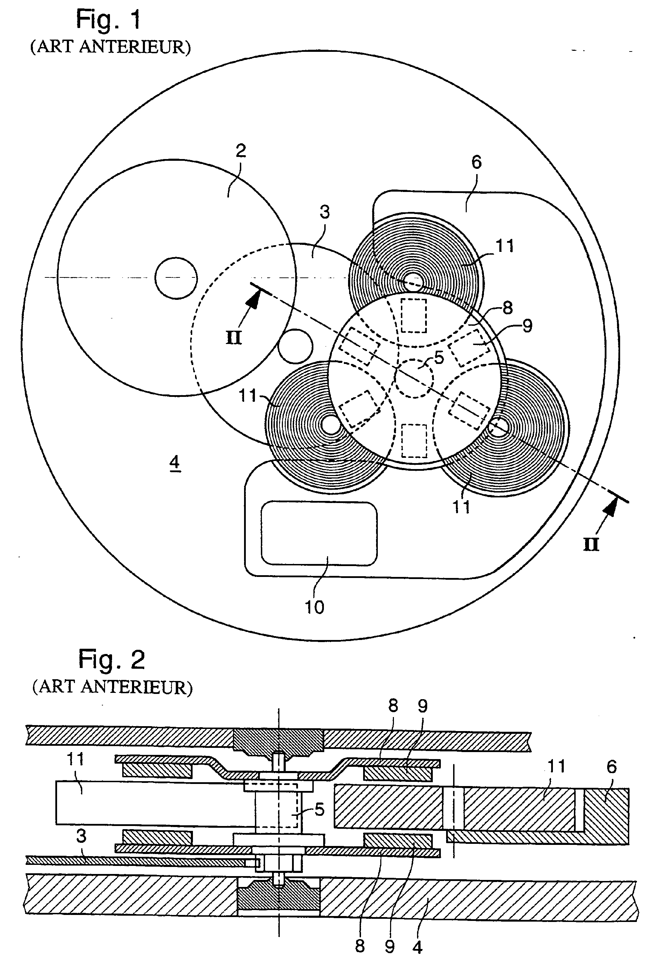

L'agencement de la génératrice selon cet art antérieur est illustré dans la figure 1 jointe, montrant une vue de dessus d'un mouvement horloger partiellement monté, et dans la figure 2 jointe, qui est une coupe transversale de la figure 1. Cette génératrice comprend un rotor ayant deux flasques 8 agencés de part et d'autre de trois bobines plates 11 formant le stator et décalées de 120° l'une par rapport à l'autre relativement à l'axe du rotor, dans un même plan orthogonal à celui-ci.

Six aimants 9 sont fixés radialement et à intervalles réguliers sur chaque flasque 8, en vis-à-vis des bobines 11. La polarité de deux aimants 9 consécutifs ou en vis-à-vis est opposée. Un circuit imprimé 6 est fixé à la platine 4 et sert de support pour les bobines 11.

L'alimentation du circuit électronique 10, à faible consommation d'énergie, est assurée par une génératrice électrique - constituée de l'ensemble arbre du rotor 5, flasques 8, aimants 9 et bobines 11 - entraînée via la liaison cinématique 3 par le dispositif à barillet 2. L'énergie mécanique stockée dans le barillet 2 entraîne donc le rotor. Le passage des aimants 9 à proximité des bobines 11 génère une tension induite substantiellement sinusoïdale aux bornes de ces bobines 11.

La tension fournie par une bobine (11) est sensiblement sinusoïdale. Le fonctionnement du dispositif de régulation nécessite une tension redressée. La tension aux bornes des bobines (11) utilisée pour alimenter le circuit électronique de régulation (10) passe donc par un circuit électrique redresseur. La tension passe ensuite par un étage amplificateur qui quadruple par exemple la tension sortant du redresseur.

Les mouvements de montre étant généralement de petite taille, les inévitables imprécisions de fabrication et de montage affectent la stabilité de la tension fournie en sortie du montage redresseur. L'étage amplificateur amplifie dans le même ordre de grandeur les variations de tension. Pour obtenir une tension redressée suffisante pour l'ensemble des mouvements à génératrice d'une série, on conserve une marge d'erreur importante en augmentant pour cela la valeur minimum prévue pour la tension redressée.

Plus la marge d'erreur est élevée sur la tension redressée, plus la tension minimum prévue en fonctionnement normal doit être élevée, ce qui se traduit par une plus grande consommation de puissance électrique dans le circuit de régulation ainsi que par une baisse de l'autonomie de la montre entre deux remontages du mécanisme de barillet (2).

L'invention vise à remédier à cet inconvénient. Elle se rapporte à cet effet à un mouvement horloger équipé d'une génératrice formée d'un rotor comportant deux flasques reliés par un arbre, des aimants étant fixés à chaque flasque en nombre pair - deux aimants consécutifs ou en vis-à-vis étant de polarité opposée. Cette génératrice comprend par ailleurs un stator comprenant une ou plusieurs bobines d'axe(s) parallèle(s) à celui du rotor, cette ou ces plusieurs bobines étant introduite(s) entre les deux flasques munis d'aimants et étant supportée(s) par un substrat. Ce mouvement est caractérisé en ce qu'au moins une partie du stator comprenant ladite bobine ou au moins une des plusieurs bobines est équipée de moyens agencés pour la déplacer de façon à rendre réglable sa position relativement au rotor dans un plan perpendiculaire à l'arbre de ce rotor, de manière à régler ainsi l'amplitude de la tension induite aux bornes de ladite bobine ou d'au moins une des plusieurs bobines lors de la rotation du rotor.

Le substrat de support de bobine(s) peut être réalisé soit en un bloc, soit en plusieurs, et comporter des perçages oblongs, soit longilignes, soit en arc de cercle, servant de guidage pour le réglage.

Un dispositif de butée excentrique permet avantageusement de modifier le réglage de tension aux bornes de la ou des bobines ainsi que de mémoriser la disposition des bobines en cas de démontage de la génératrice.

L'invention sera bien comprise et d'autres avantages ressortiront de la description suivante d'exemples non limitatifs de réalisation, faite en référence aux dessins schématiques annexés dans lesquels :
- la figure 3 est une vue de dessus et la figure 4 est une vue en coupe d'un premier mode de réalisation du mouvement horloger à génératrice selon l'invention comportant trois bobines solidaires d'un substrat monobloc;
- la figure 5 est une vue de dessus et la figure 6 est une vue en coupe d'un second mode de réalisation comportant un ensemble formé d'un substrat en deux parties dont l'une portant une bobine dispose d'un réglage pivotant relativement au corps de la montre;
- la figure 7 montre l'agencement sur un pont de la connexion électrique entre les deux parties du substrat du second mode de réalisation.

La construction reprend à l'identique les éléments suivants étudiés dans l'art antérieur : le corps de la montre 4, les aimants 9, les flasques 8, le circuit électronique 10, l'arbre 5 du rotor et les bobines statoriques 11a, 11b et 11c.

Les deux modes de réalisation qui suivent reposent sur un même concept où le stator est au moins partiellement déplaçable relativement au rotor pour permettre d'effectuer un réglage de la tension fournie par les bobines 11a, 11b et 11c. Dans ces deux cas, le substrat 6 est solidaire des bobines et une partie au moins de ce substrat 6, supportant au moins une bobine, est déplaçable par rapport au rotor monté rotatif dans le corps 4 de la montre.

Par modification de la position relative d'au moins une des bobines 11a, 11b et/ou 11c et du rotor, on modifie l'amplitude de la tension induite fournie par ces bobines. On utilise dans chaque exemple un stator formé de trois bobines plates et cylindriques. Le substrat 6 présente un circuit imprimé et supporte un circuit électronique de régulation 10.

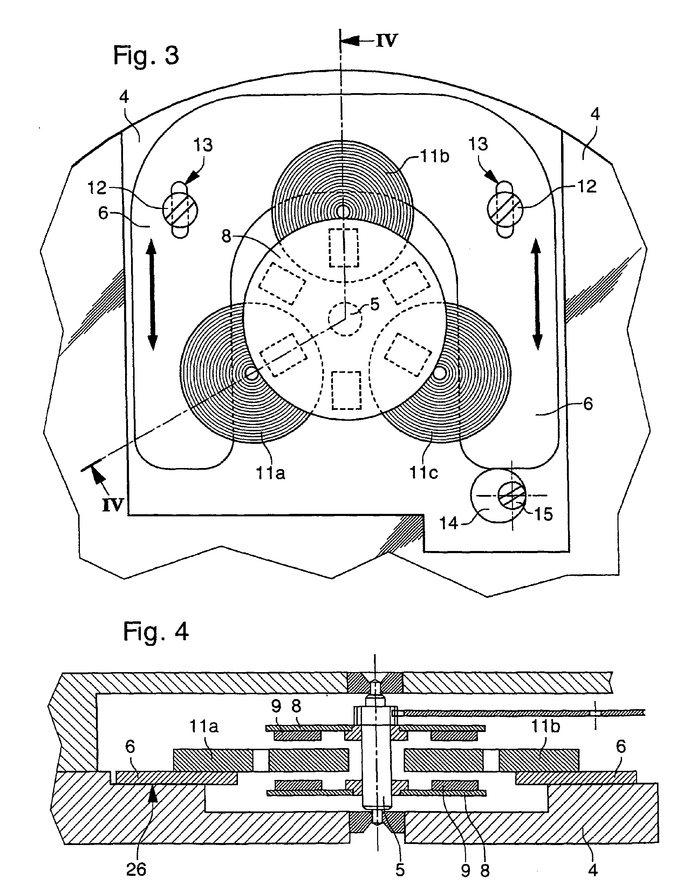

Un premier mode de réalisation, représenté aux figures 3 et 4, comporte un substrat 6 monobloc supportant les trois bobines 11a, 11b et 11c.

Dans le substrat 6 sont prévus deux trous 13 oblongs et rectilignes. Les axes longitudinaux de ces trous 13 sont parallèles. Deux vis 12 traversent ces trous 13 et viennent s'implanter dans un filetage du corps 4 de la montre. Le réglage de la position du stator est possible dès lors que le serrage des vis 12 est suffisamment faible pour permettre un mouvement relatif entre le corps 4 et le substrat 6 qui est agencé dans un évidement 26 de ce corps 4.

On notera qu'il est envisagé dans une variante que la largeur des trous 13 soit supérieure au diamètre des vis 12 au niveau de ces trous 13 de manière à permettre également un réglage fin de la position du substrat 6 selon une direction perpendiculaire aux axes longitudinaux des trous 13.

Un galet cylindrique 14 monté rotatif autour d'un axe excentré défini par une vis 15 et appuyant contre le substrat 6 permet en outre d'obtenir un meilleur contrôle du réglage de la tension induite ainsi qu'une mémorisation de ce réglage. Ce dispositif favorise le remontage du système dans le cas d'un démontage nécessité par des opérations de maintenance éventuelles, car il évite ainsi à un opérateur de devoir renouveler le réglage de la tension.

Dans une variante préférée, le galet 14 est solidaire de la vis 15. Cette vis 15 est implantée dans le corps 4 de manière à autoriser un contact entre le galet 14 et une face latérale du support 16 de préférence perpendiculaire aux axes longitudinaux des trous oblongs 13. La rotation de la vis 15 entraîne donc le galet 14 et on modifie ainsi la distance entre la vis 15 et le support 16.

Ce dispositif de butée permet donc de régler la position du stator par simple rotation de la vis 15, la position de fonctionnement ainsi mémorisée restant inchangée en l'absence de toute nouvelle manipulation de cette vis 15.

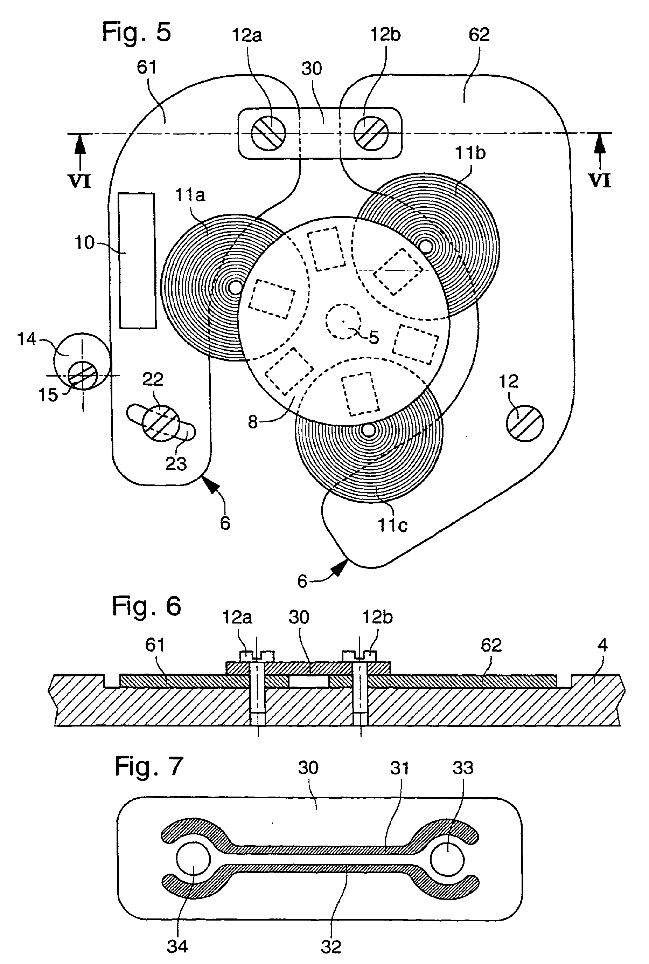

Un deuxième mode de réalisation, représenté aux figures 5 à 7, comporte un substrat 6, constitué de deux plaques 61 et 62 dont l'une supporte la bobine 11a et l'autre supporte les bobines 11b et 11c. Dans cette réalisation, le réglage s'effectue uniquement par rotation de la plaque 61 autour d'un axe. La plaque 62 reste fixe par rapport au corps 4 de la montre.

Dans la plaque 61, un trou 23 oblong et curviligne est réalisé, l'arc défini par ce trou 23 étant centré sur l'axe de la vis 12a. Dans le trou 23 est agencée une vis 22 servant à fixer la plaque 61 ensemble avec la vis 12a.

Un pont 30 fixé par les vis 12a et 12b sert à établir une connexion électrique entre deux pistes électriques (non représentées) prévues d'une part sur la plaque 61 et d'autre part sur la plaque 62. Chaque piste 31, respectivement 32 sur le pont 30 présente autour des trous 33 et 34 pour le passage des vis une extrémité en arc de cercle. Ainsi, la connexion reste assurée lorsque la plaque 61 est tournée lors de l'ajustement de sa position.

La plaque 62 est rendue solidaire du corps 4 du mouvement de montre par deux vis 12 et 12b. Le réglage de la position du stator est possible dès lors que le serrage des vis 12a et 22 du demi-stator déplaçable, formé de la plaque 61 et de la bobine 11a, est suffisamment faible pour permettre une rotation de ce demi-stator. Le demi-stator tourne alors autour de la vis 12a. Le réglage étant réalisé, il suffit de serrer les vis 12a et 22 pour rendre le stator solidaire du corps 4.

Comme dans le premier mode de réalisation, il est prévu un galet cylindrique 14 monté rotatif autour d'un axe excentré défini par une vis 15 et appuyant contre le substrat 61. Ce dispositif de butée permet de régler la position du demi-stator déplaçable par simple rotation de la vis 15.

Dans une variante de ce deuxième mode, l'ensemble du stator est déplaçable selon un arc de cercle. Au besoin, plusieurs trous oblongs et curvilignes peuvent être prévus.

Bien entendu, l'invention n'est pas limitée aux modes de réalisation qui viennent d'être décrits, et d'autres formes d'exécution, utilisant en particulier des moyens équivalents, sont envisageables. L'invention est limitée et définie par les revendications.

## Revendications

1. Mouvement du type horloger équipé d'une génératrice formée d'un rotor comportant deux flasques (8) reliés par un arbre (5), des aimants (9) étant fixés à chaque flasque (8) en nombre pair, deux aimants consécutifs ou en vis-à-vis étant de polarité opposée, cette génératrice étant en outre formée par un stator comprenant une ou plusieurs bobines (11a, 11 b, 11 c) d'axe parallèle ou d'axes parallèles à celui du rotor, cette ou ces plusieurs bobines étant introduite ou introduites entre les deux flasques (8) munis d'aimants (9) et étant supportée ou supportées par un substrat (6), **caractérisé en ce qu'**au moins une partie (6, 61) dudit stator comprenant ladite bobine ou au moins une des plusieurs bobines est équipée de moyens (12,13,17) agencés pour la déplacer de façon à rendre réglable sa position relativement audit rotor dans un plan perpendiculaire audit arbre de ce rotor, de manière à régler ainsi l'amplitude de la tension induite aux bornes de ladite bobine ou d'au moins une des plusieurs bobines (11) lors de la rotation dudit rotor.

2. Mouvement selon la revendication 1, **caractérisé en ce qu'**il comprend des moyens (14,15,17) de mémorisation de la position de réglage de ladite au moins une partie statorique.

3. Mouvement selon la revendication 2, **caractérisé en ce que** lesdits moyens de réglage et de mémorisation de la position de ladite au moins une partie statorique sont constitués d'un galet (14) monté rotatif autour d'un axe excentré et appuyant contre une face latérale du stator, ce galet étant associé à des moyens de blocage de sa position.

4. Mouvement selon l'une des revendications 1 à 3, **caractérisé en ce que** ladite au moins une partie statorique (61) dispose de moyens (12,33,17) lui permettant de pivoter autour d'un axe parallèle à l'arbre du rotor.

5. Mouvement selon la revendication 4, **caractérisé en ce que** ladite au moins une partie statorique (61) pivote autour d'un axe et est guidée par au moins une vis (22) traversant un trou oblong et curviligne (23) servant de glissière à cette vis_{.}

6. Mouvement selon l'une des revendications 1 à 3, **caractérisé en ce que** ladite au moins une partie statorique (6) comprend des moyens (12,13,17) lui permettant de se translater relativement audit rotor dans un plan perpendiculaire à son arbre (5).

7. Mouvement selon la revendication 6, **caractérisé en ce que** ladite au moins une partie statorique (6) comprend plusieurs trous oblongs (13) et rectilignes, traversés par autant de vis (12) servant de guides.

## Claims

1. Clockwork movement fitted with a generator formed of a rotor including two flanges (8) connected by a shaft (5), magnets (9), in even numbers, being secured to each flange (8), two consecutive or facing magnets having opposite polarity, this generator being further formed of a stator including one or a plurality of coils (11 a, 11 b, 11c) with axe or axes parallel to that of the rotor, said coil or said plurality of coils being inserted between said two flanges (8) fitted with magnets (9) and being supported by a substrate (6), **characterised in that** at least one part (6, 61) of the stator including said coil or at least one coil of said plurality is fitted with means (12, 13, 17) allowing it to be moved so as to make its position adjustable relative to the rotor in a plane perpendicular to the shaft of said rotor, so as to adjust the amplitude of the induced voltage across the terminals of said coil or at least one coil of said plurality when the rotor rotates.

2. Movement according to claim 1, **characterised in that** it includes means (14, 15 ,17) for memorising the adjustment position of said at least one stator part.

3. Movement according to claim 2, **characterised in that** said means (14, 15 ,17) for memorising the adjustment position of said at least one stator part are formed of a roller (14) rotatably mounted about an eccentric axis and pressing against a lateral face of said stator, said roller being associated with means for blocking its position.

4. Movement according to any of claims 1 to 3, **characterised in that** said at least one stator part (61) comprises means (12, 33, 17) allowing it to pivot about an axis parallel to the rotor shaft.

5. Movement according to any of claims 1 to 3, **characterised in that** said at least one stator part (61) pivots about an axis and is guided by at least one screw (22) passing through an oblong and curved hole (23) acting as a guide for said screw.

6. Movement according to any of claims 1 to 3, **characterised in that** said at least one stator part (61) comprises means (12, 33, 17) allowing it to translate relative to said rotor in a plan perpendicular to its shaft (5).

7. Movement according to claim 6, **characterised in that** said at least one stator part (61) comprises a plurality of oblong and rectilinear holes traversed by as many screws (12) used as guides.

## Patentansprüche

1. Uhrwerk, das mit einem Generator versehen ist, der aus einem Rotor gebildet ist, der zwei durch eine Welle (5) verbundene Flanschen (8) aufweist, wobei an jedem Flansch (8) Magneten (9) in einer geraden Anzahl befestigt sind, wobei zwei aufeinander folgende oder gegenüber liegende Magneten entgegengesetzte Polarität haben, wobei dieser Generator außerdem durch einen Stator gebildet ist, der eine oder mehrere Wicklungen (11a, 11b, 11c) mit einer oder mit mehreren Achsen, die zu jener des Rotors parallel ist bzw. sind, besitzt, wobei diese eine oder diese mehreren Wicklungen zwischen die zwei mit Magneten (9) versehenen Flansche (8) eingeführt sind und durch ein Substrat (6) getragen werden, **dadurch gekennzeichnet, dass** wenigstens ein Teil (6, 61) des Stators, der die Wicklung oder wenigstens eine der Wicklungen enthält, mit Mitteln (12, 13, 17) versehen ist, die dazu ausgelegt sind, ihn zu verlagern, derart, dass seine Position relativ zum Rotor in einer Ebene senkrecht zur Welle dieses Rotors verstellbar ist, so dass die Amplitude der Spannung, die an die Anschlüsse der Wicklung oder wenigstens einer der mehreren Wicklungen (11) angelegt wird, während der Drehung des Rotors eingestellt wird.

2. Werk nach Anspruch 1, **dadurch gekennzeichnet, dass** es Mittel (14, 15, 17) zum Speichern der Verstellposition des wenigstens einen Statorteils umfasst.

3. Werk nach Anspruch 2, **dadurch gekennzeichnet, dass** die Mittel zum Verstellen und Speichern der Position des wenigstens einen Statorteils durch eine Rolle (14) gebildet sind, die drehbar um eine exzentrische Achse montiert ist und sich an einer Seitenfläche des Stators abstützt, wobei dieser Rolle Mittel zum Blockieren ihrer Position zugeordnet sind.

4. Werk nach einem der Ansprüche 1 bis 3, **dadurch gekennzeichnet, dass** der wenigstens eine Statorteil (61) über Mittel (12, 33, 17) verfügt, die ihm ermöglichen, um eine zur Welle des Rotors parallele Achse zu schwenken.

5. Werk nach Anspruch 4, **dadurch gekennzeichnet, dass** der wenigstens eine Statorteil (61) um eine Achse schwenkt und durch wenigstens eine Schraube (22) geführt ist, die durch ein langes und gekrümmtes Loch (23) verläuft, das als Laufbahn für diese Schraube dient.

6. Werk nach einem der Ansprüche 1 bis 3, **dadurch gekennzeichnet, dass** der wenigstens eine Statorteil (6) Mittel (12, 13, 17) umfasst, die ihm ermöglichen, sich in einer Ebene senkrecht zu der Welle des Rotors (5) relativ zu ihm translatorisch zu bewegen.

7. Werk nach Anspruch 6, **dadurch gekennzeichnet, dass** der wenigstens eine Statorteil (6) mehrere lange und gekrümmte Löcher (13) umfasst, durch die ebenso viele Schrauben (12) verlaufen, die als Führungen dienen.
